# EUROPEAN PATENT SPECIFICATION

(11) **EP 4 148 886 B1**
(45) Date of publication and mention of the grant of the patent: **25.03.2026**
(21) Application number: 21872975.4
(22) Date of filing: 27.09.2021
(51) Int. Cl.: H01M 50/30, H01M 50/116, H01M 50/572, H01M 50/172, H01M 50/183, H01M 50/543, H01M 10/02, H01M 50/105, H01M 50/178

(54) **SECONDARY BATTERY AND METHOD FOR MANUFACTURING THE SAME**
SEKUNDÄRBATTERIE UND VERFAHREN ZUR HERSTELLUNG DAVON
BATTERIE SECONDAIRE ET SON PROCÉDÉ DE FABRICATION

(30) Priority: 28.09.2020 KR 20200126429; 28.09.2020 KR 20200126430; 23.09.2021 KR 20210125592
(43) Date of publication of application: 15.03.2023
(73) Proprietor: LG Energy Solution, Ltd., Seoul 07335 (KR)
(72) Inventor: LIM, Hun Hee, Daejeon 34122 (KR); KIM, Sang Hun, Daejeon 34122 (KR); KANG, Min Hyeong, Daejeon 34122 (KR); YU, Hyung Kyun, Daejeon 34122 (KR)
(74) Representative: Plasseraud IP
(86) International application number: PCT/KR2021/013124
(87) International publication number: WO 2022/065947

(56) References cited:
- JP-A- 2005 038 707
- JP-A- 2006 236 775
- JP-A- 2011 108 433
- JP-A- 2011 108 433
- JP-A- 2014 212 034
- JP-B2- 6 646 352
- KR-A- 20060 112 035
- KR-A- 20080 019 551
- KR-A- 20150 135 878
- KR-A- 20190 042 953
- US-A1- 2003 118 900

## Description

### CROSS-REFERENCE TO RELATED APPLICATION

The present application claims the benefit of the priority of Korean Patent Application Nos. 10-2020-0126429, filed on September 28, 2020, 10-2020-0126430, filed on September 28, 2020, and 10-2021-0125592.

### TECHNICAL FIELD

The present invention relates to a secondary battery having a structure that discharges a gas inside a pouch and blocks an inflow of moisture outside the pouch, and a method for manufacturing the same.

### BACKGROUND ART

In general, secondary batteries refer to chargeable and dischargeable batteries, unlike primary batteries that are not chargeable. Such a secondary battery is being widely used in the high-tech electronic fields such as mobile phones, notebook computers, and camcorders.

The secondary batteries are classified into a can type secondary battery, in which an electrode assembly is embedded in a metal can, and a pouch type secondary battery in which an electrode assembly is embedded in a pouch. Also, the pouch type secondary battery comprises an electrode assembly, an electrode lead coupled to an electrode tab of the electrode assembly, and a pouch accommodating the electrode assembly in a state in which a front end of the electrode lead is drawn out.

However, the secondary battery having the above structure has a problem in that when a gas pressure inside the pouch increases due to overcharging or short circuit, the pouch is vented to cause explosion or ignition.

JP 2005 038707 A discloses a secondary battery and a sealing material for electrode tab thereof. JP 2011 108433 A discloses a power storage device.

### DISCLOSURE OF THE INVENTION

### TECHNICAL PROBLEM

The present invention is invented to solve the above problems, and an object of the present invention is to provide a secondary battery, which comprises a gas discharge part that discharges only a gas generated in a pouch to the outside, thereby preventing a pouch from being exploded or ignited while the pouch is vented, particularly, preventing moisture from being introduced into the pouch so as to prevent the secondary battery from being deteriorated in performance, and a method for manufacturing the same.

In addition, an object of the present invention provides is to provide a secondary battery comprising a gas discharge part between an electrode lead and a sealing part, between which possibility of venting is high, thereby improving safety of the secondary battery, and a method for manufacturing the same.

### TECHNICAL SOLUTION

A secondary battery according to the present invention for achieving the above objects is laid out in appended claim 1.

The gas discharge part may be provided in the sealing part.

An adhesive film configured to seal a gap between the gas discharge part and the sealing part may be provided between the gas discharge part and the sealing part.

The adhesive film may be made of a material having air permeability.

The adhesive film may be provided to surround an entire outer circumferential surface of the gas transmitting film so as not to expose the gas discharge part to the outside.

The adhesive film may have air permeability less than that of the gas transmitting film.

The moisture absorbing material may be provided on an outer surface of the gas transmitting film.

The moisture absorbing material may be provided to be contained in the gas transmitting film.

The gas transmitting film may be made of a thermoplastic resin, and the moisture absorbing material may be made of oxide that absorbs moisture.

A method for manufacturing a secondary battery according to the present invention is laid out in appended claim 10.

The method may further comprise, after the gas discharge part is manufactured in the process (c), a process of attaching an adhesive film to the outside of the gas discharge part.

In the process(c), the moisture absorbing material may be provided outside the gas transmitting film.

In the process (c), the moisture absorbing material may be contained in the gas transmitting film when the gas transmitting film is manufactured.

### ADVANTAGEOUS EFFECTS

The secondary battery of the present invention may comprise the gas discharge part between the electrode lead and the sealing part of the pouch, and the gas discharge part may comprise the gas transmitting film and the moisture absorbing material. That is, the gas discharge part may be provided between the pouch of the electrode lead and the sealing part, between which the possibility of the venting is high, to improve the safety of the secondary battery.

That is to say, the gas discharge part may stably discharge the gas from the inside of the pouch to the outside through the gas transmitting film and may absorb the moisture, which passes through the gas transmitting film, through the moisture absorbing material to block the inflow of the moisture into the pouch.

### BRIEF DESCRIPTION OF THE DRAWINGS

FIG. 1 is an exploded perspective view of a secondary battery according to a first embodiment of the present invention.
FIG. 2 is a plan view of the secondary battery according to the first embodiment of the present invention.
FIG. 3 is a cross-sectional view taken along line A-A of FIG. 2.
FIG. 4 is a cross-sectional view taken along line B-B of FIG. 3.
FIG. 5 is a cross-sectional view illustrating a second example of a moisture absorbing material of the secondary battery according to the first embodiment of the present invention.
FIG. 6 is a cross-sectional view illustrating a third example of the moisture absorbing material of the secondary battery according to the first embodiment of the present invention.
FIG. 7 is a flowchart illustrating a method for manufacturing the second battery according to the first embodiment of the present invention.
FIGS. 8 to 12 are views illustrating the method for manufacturing the secondary battery according to the first embodiment of the present invention, wherein FIG. 8 is a perspective view illustrating a process of preparing a pouch,
FIG. 9 is a perspective view illustrating a process of disposing an electrode assembly, FIG. 10 is a view illustrating a process of manufacturing a gas discharge part, FIG. 11 is a perspective illustrating a process of disposing the gas discharge part, and FIG. 12 is a perspective view illustrating a process of manufacturing a secondary battery to which the gas discharge part is coupled.
FIG. 13 is a cross-sectional view of a secondary battery according to a second embodiment of the present invention.
FIG. 14 is a cross-sectional view of a secondary battery according to a third embodiment of the present invention.
FIG. 15 is a plan view of a secondary battery according to a fourth embodiment of the present invention.
FIG. 16 is a cross-sectional view taken along line C-C of FIG. 15.

### MODE FOR CARRYING OUT THE INVENTION

Hereinafter, embodiments of the present invention will be described in detail with reference to the accompanying drawings in such a manner that the technical idea of the present invention may easily be carried out by a person with ordinary skill in the art to which the invention pertains. The present invention may, however, be embodied in different forms and should not be construed as limited to the embodiments set forth herein. In the drawings, anything unnecessary for describing the present invention will be omitted for clarity, and also like reference numerals in the drawings denote like elements.

### [Secondary battery according to first embodiment of the present invention]

A secondary battery 100 according to a first embodiment of the present invention has a structure that discharges a gas from the inside of a pouch to the outside and blocks an inflow of moisture from the outside to the inside of the pouch.

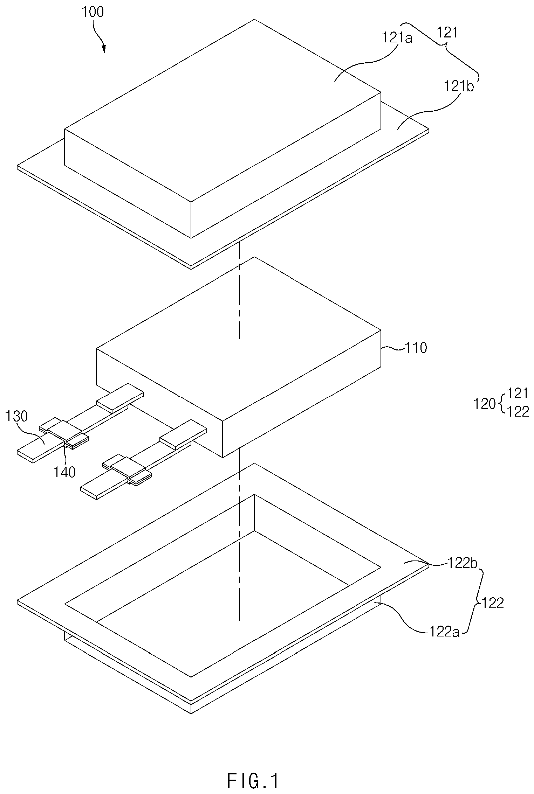

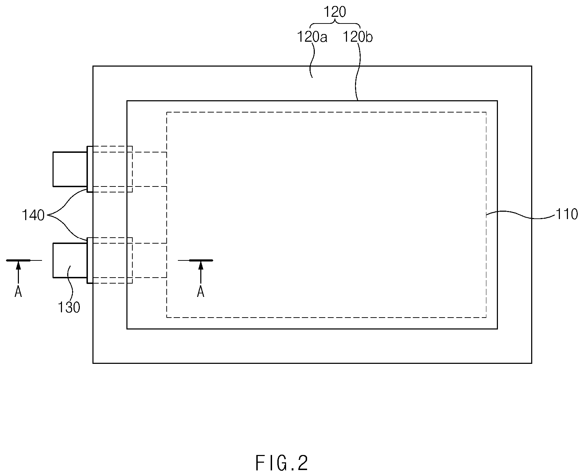

That is, as illustrated in FIGS. 1 and 2, the secondary battery 100 according to the first embodiment of the present invention comprises an electrode assembly 110 to which an electrode lead 130 is coupled, a pouch 120 accommodating the electrode assembly 110 in a state, in which a front end of the electrode lead 130 is withdrawn to the outside, and a gas discharge part 140 provided between the electrode lead 130 and the pouch 120 to discharge a gas from the outside to the inside of the pouch 120 and block an inflow of moisture from the outside to the inside of the pouch 120.

### Electrode assembly

The electrode assembly 110 has a structure in which a plurality of electrodes are stacked in a vertical direction with a separator therebetween. Here, an electrode tab is provided on the electrode, and the electrode lead 130 is coupled to the electrode tab.

The plurality of electrodes comprise a first electrode and a second electrode, and the electrode tab comprises a first electrode tab provided on the first electrode and a second electrode tab provided on the second electrode. The electrode lead 130 comprises a first electrode lead coupled to the first electrode tab and a second electrode lead coupled to the second electrode tab.

Here, the first electrode may be a positive electrode, and the second electrode may be a negative electrode, and vice versa.

### Pouch

The pouch 120 comprises an accommodation part 120a accommodating the electrode assembly 110 and an electrolyte (not shown) in the state in which the electrode lead 130 is withdrawn to the outside, and a sealing part 120b formed along an edge of the accommodation part 120a to seal the accommodation part 120a.

The pouch 120 comprises an upper case 121 and a lower case 122. The upper case 121 comprises an upper accommodation surface 121a having an accommodation groove accommodating an upper portion of the electrode assembly 110, and an upper sealing surface 121b formed along an edge of the upper accommodation surface 121a. The lower case 122 comprises a lower accommodation surface 122a having an accommodation groove accommodating a lower portion of the electrode assembly 110 and a lower sealing surface 122b formed along an edge of the lower accommodation surface 122a.

The pouch 120 having such a structure forms the accommodation part 120a accommodating the entire electrode assembly 110 while the upper accommodation surface 121a and the lower accommodation surface 122a are vertically connected to each other and forms the sealing part 120b that thermally fuses the upper sealing surface 121a and the lower sealing surface 122b to seal the accommodation part 120a.

Here, the front end of the electrode lead 130 is withdrawn to the outside through the sealing part 120b disposed on one of the edges of the accommodating part 120a That is, the front end of the electrode lead 130 is withdrawn between the upper sealing surface 121a and the lower sealing surface 122b.

The sealing part 120b through which the electrode lead 130 is withdrawn has weak sealing strength when compared to the rest of the sealing part 120b. Thus, when a gas pressure inside the pouch greatly increases, venting may occur between the electrode lead 130 and the sealing part 120b to cause explosion or ignition.

In order to solve the above problem, the secondary battery 100 according to the first embodiment of the present invention may comprise the gas discharge part 140, which is provided in the pouch 120 to discharge the gas from the outside to the inside of the pouch 120 and block an inflow of moisture from the outside to the inside of the pouch 120, thereby preventing the explosion or the ignition from occurring through the gas discharge part 140.

For example, referring to FIG. 2, the gas discharge part 140 is provided between the electrode lead 130 and the sealing part 120b and comprises a gas transmitting film 141 having air permeability for discharging a gas inside the accommodation part 120a to the outside and a moisture absorbing material 142 absorbing moisture passing through the gas transmitting film 141 to block the inflow of the moisture from the outside to the inside of the pouch 120. Thus, the gas generated inside the pouch may be discharged through the gas discharge part 140 to improve safety. Particularly, the gas discharge part 140 may comprise a material that absorbs moisture to block the inflow of the moisture from the outside to the inside of the pouch 120 and discharge only the gas inside the pouch 120.

Hereinafter, the gas discharge part 140 will be described in more detail.

### Gas discharge part

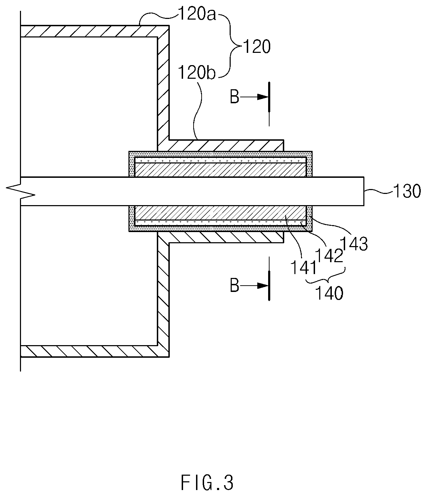

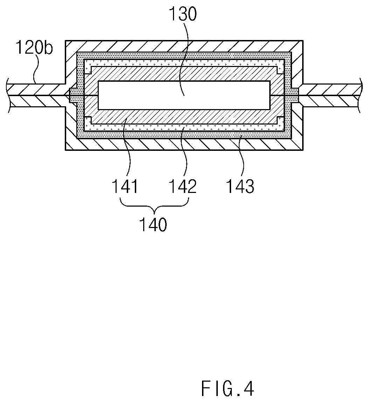

As illustrated in FIGS. 3 and 4, the gas discharge part 140 is provided between the electrode lead 130 and the sealing part 120b to discharge the gas from the inside to the outside of the pouch 120 and block the inflow of the moisture from the outside to the inside of the pouch 120. That is, the gas discharge part 140 has a structure capable of discharging only the gas inside the pouch to the outside.

For example, the gas discharge part 140 comprises the gas transmitting film 141 discharging the gas from the inside to the outside of the pouch 120 and the moisture absorbing material 142 absorbing the moisture introduced into the pouch through the gas transmitting film 141.

The gas transmitting film 141 is provided between the electrode lead 130 and the sealing part 120b. Preferably, the gas transmitting film 141 is provided in a shape surrounding the electrode lead 130 between the electrode lead 130 and the sealing part 120b to seal a gap between the electrode lead 130 and the gas discharge part 140. Particularly, both ends of the gas transmitting film 141 are disposed to protrude to the inside and outside of the sealing part 120b. Thus, an area of the gas transmitting film 141 exposed to the inside and outside of the pouch 120 may increase to improve gas discharge performance and minimize a phenomenon in which the gas transmitting film 141 is blocked by foreign substances.

The gas transmitting film 141 having such a structure may be made of a synthetic resin material having air permeability and preferably made of a thermoplastic resin. For example, the gas transmitting film may be made of polypropylene. Thus, the gas generated inside the pouch 120 may be discharged to the outside. Particularly, while the gas transmitting film 141 is provided in a shape surrounding a circumference of the electrode lead 130 to effectively discharge the gas inside the pouch before the gap between the electrode lead and the sealing part is vented.

The moisture absorbing material 142 is provided as a material that absorbs moisture and disposed on an outer surface of the gas transmitting film 141. Thus, the moisture absorbing material 142 is provided on the gas transmitting film 141 to absorb and remove the moisture introduced through the gas transmitting film 141 from the outside of the pouch 120. That is, the moisture absorbing material 142 blocks the inflow of the moisture from the outside to the inside of the pouch 120.

That is, the moisture absorbing material 142 has a film shape, is provided as oxide absorbing the moisture, and is provided in a shape surrounding an outer circumference of the gas transmitting film 141.

Here, the moisture absorbing material 142 is provided as any one of CaO, LiCl, Si₃N₄, SiO₂, Al₂O₃, mullite, ZrO₂, Y₂O₃, MgO, BeO, TiB₂, TiC, HfC, and ZrC. Here, the moisture absorbing material may further comprise a getter.

The getter may be difficult to be used alone and thus may be used as a composite material comprising a binder. That is, the composite material in which the getter and the binder are combined at a set ratio may be prepared in the form of a film. The getter refers to a material that absorbs a gas or moisture remaining in a vacuum object.

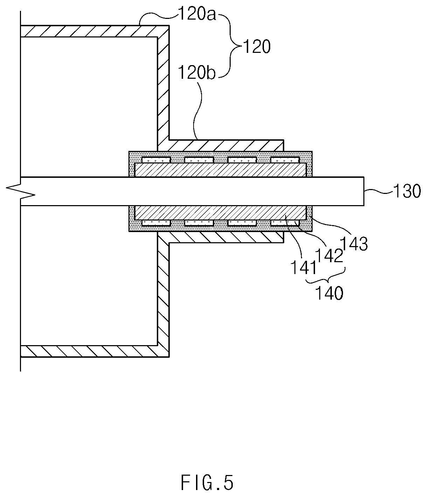

Referring to FIG. 5, a plurality of moisture absorbing materials 142, each of which has the film shape, may be disposed outside the gas transmitting film 141 at regular intervals along a longitudinal direction of the electrode lead 130. Thus, the inflow of the moisture may be blocked in multiple stages through the plurality of moisture absorbing materials.

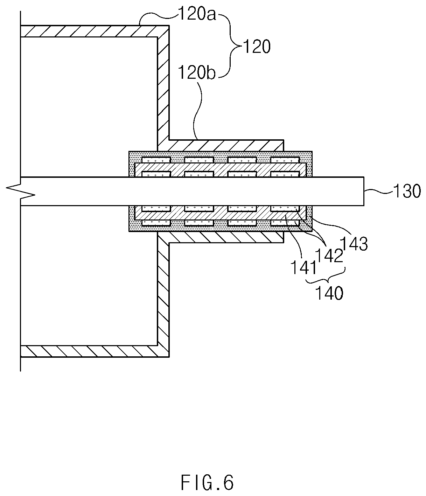

Referring to FIG. 6, the moisture absorbing material 142 having the film shape may be further disposed between the electrode lead 130 and the gas transmitting film 141. Particularly, a plurality of electrode leads 130 may be disposed at regular intervals in the longitudinal direction between the electrode lead 130 and the gas transmitting film 141. Thus, the moisture to be introduced between the inside and outside of the gas transmitting film 141 may be effectively absorbed and removed, and in particular, the inflow of the moisture may be blocked in multiple stages.

The moisture absorbing material 142 may be provided to be contained inside the gas transmitting film, thereby minimizing an increase in thickness of the gas discharge part and obtain an effect of blocking the gas discharge and the moisture inflow. Particularly, the moisture absorbing material 142 may be contained to be dispersed throughout the gas transmitting film 141 or be contained in the form of a lump at a center of the gas transmitting film 141.

The moisture absorbing material 142 may be embedded in the gas transmitting film 141 so as not to be exposed to the outside. That is, the external exposure of the moisture absorbing material 142 may be prevented to prevent the electrolyte from being contaminated by the moisture absorbing material.

An adhesive film 143 may be provided between the gas discharge part 140 and the sealing part 120b to improve bonding strength and sealing strength between the gas discharge part 140 and the sealing part 120b.

The adhesive film 143 may use any one of polypropylene (PP) and polyethylene (PE).

That is, the adhesive film 143 is configured to bond and seal the gas transmitting film provided with the moisture absorbing material between the electrode lead and the sealing part, is made of a synthetic resin material having air permeability, and is provided in a shape surrounding a circumference of the gas transmitting film provided with the moisture absorbing material. Thus, the adhesive member 143 may seal the gap between the gas transmitting film 141 and the sealing part 120b and discharge the gas inside the pouch to the outside together with the gas transmitting film.

Here, the adhesive film 143 has air permeability less than that of the gas transmitting film 141. This is for discharging the gas inside the pouch together with the gas transmitting film 141 while minimizing weakening of the adhesive force of the adhesive film 143 due to the gas discharge.

The adhesive film 143 may be provided in the shape that surrounds the entire outer circumferential surface of the gas transmitting film so that the moisture absorbing material is not exposed to the outside, thereby protecting the moisture absorbing material and preventing the electrolyte inside the pouch from being contaminated by the moisture absorbing material.

Particularly, it is possible to adjust discharging force of the gas passing through the gas transmitting film 141 through the adhesive film 143.

Therefore, since the secondary battery 100 according to the first embodiment of the present invention comprises the gas discharge part 140 between the electrode lead and the sealing part, the gas inside the pouch may be effectively discharged, and the inflow of the moisture from the outside to the inside of the pouch may be effectively blocked. As a result, the safety may be improved.

Hereinafter, a method for manufacturing the secondary battery according to the first embodiment of the present invention will be described.

### [Method for manufacturing secondary battery according to first embodiment of the present invention]

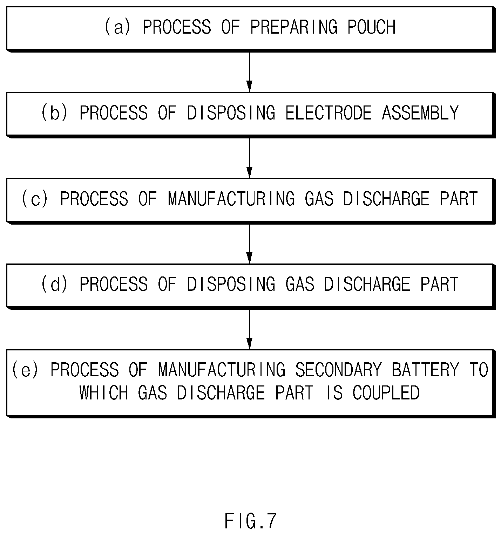

As illustrated in FIGS. 7 to 12, a method for manufacturing the secondary battery according to the first embodiment of the present invention comprises a process (a) of preparing a pouch, a process (b) of disposing an electrode assembly, a process (c) of manufacturing a gas discharge part, a process (d) of disposing the gas discharge part, and a process (e) of completing the secondary battery in which the gas discharge part is formed.

### Process (a)

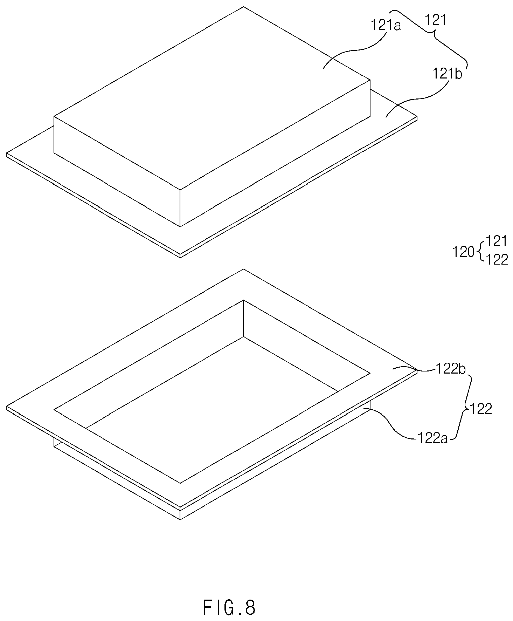

In the process (a), referring to FIG. 8, the pouch 120 having an upper case 121 and a lower case 122 is prepared. Here, the upper case 121 comprises an upper accommodation surface 121a and an upper sealing surface 121b, and the lower case 122 comprises a lower accommodation surface 122a and a lower sealing surface 122b.

The upper accommodation surface 121a and the lower accommodation surface 122a are vertically disposed to form an accommodation part 120a accommodating the electrode assembly, and the upper sealing surface 121b and the lower sealing surface 122b are bonded to each other to form a sealing part 120b sealing the accommodation part 120a.

### Process (b)

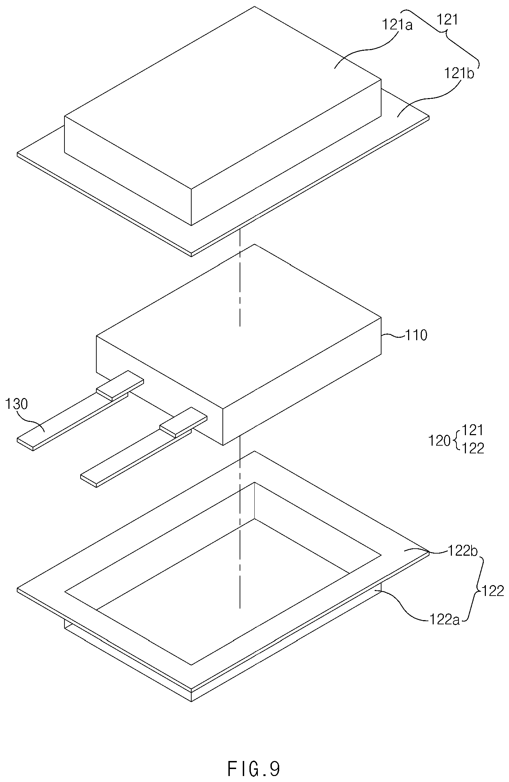

In the process (b), referring to FIG. 9, the upper case 121 and the lower case 122 are disposed to correspond to each other, and then, the electrode assembly 110, to which an electrode lead 130 is coupled, is disposed in the accommodation part 120a formed by connecting the upper accommodation surface 121a to the lower accommodation surface 122a.

### Process (c)

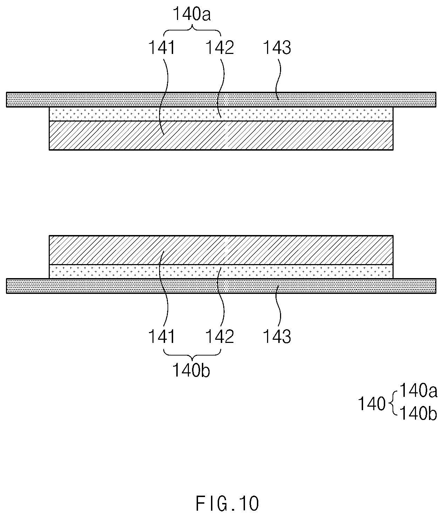

In the process (c), referring to FIG. 10, the gas discharge part 140 comprising a gas transmitting film 141 having air permeability and a moisture absorbing material 142 that absorbs moisture is manufactured, and an adhesive film 143 having adhesive force is attached to the outside of the gas discharge part.

For example, the gas discharge part 140 is provided with two gas discharge films 140a and 140b in which the gas transmitting film 141 having the air permeability and the moisture absorbing material 142 absorbing moisture are sequentially stacked, and the adhesive film 143 is attached to an outer surface of each of the gas discharge films 140a and 140b.

That is, the gas transmitting film 141, the moisture absorbing material 142, and the adhesive film 143 have a three-layered structure.

Here, the adhesive film 143 has an area greater than that of each of the gas transmitting film 141 and the moisture absorbing material 142, and thus, when the gas discharge part is formed, the gas transmitting film 141 and the moisture absorbing material 142 may be surrounded through the adhesive film 143.

In addition, the moisture absorbing material 142 may have an area less than that of each of the gas transmitting film 141 and the adhesive film 143 so as to be embedded between the gas transmitting film 141 and the adhesive film 143.

The moisture absorbing material 142 is provided as any one of CaO, LiCl, Si₃N₄, SiO₂, Al₂O₃, mullite, ZrO₂, Y₂O₃, MgO, BeO, TiB₂, TiC, HfC, and ZrC, which are excellent in moisture absorption.

The adhesive film 143 has air permeability, but has air permeability less than that of the gas transmitting film 141.

### Process (d)

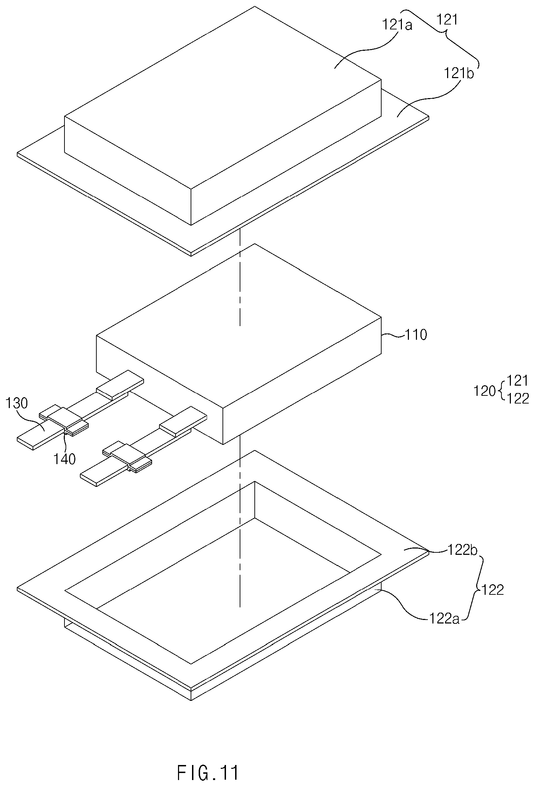

In the process (d), referring to FIG. 11, the gas discharge part is disposed between the upper sealing surface of the upper case and the lower sealing surface of the lower case.

More preferably, in the process (d), the gas discharge films 140a and 140b are symmetrically disposed on top and bottom surfaces of the electrode lead 130 disposed between the upper sealing surface 121b and the lower sealing surface 122b. Here, the gas transmitting film 141 is disposed to face the electrode lead 130.

The process (d) may further comprise a process of bonding the gas exhaust films 140a and 140b disposed on the top and bottom surfaces of the electrode lead 130. Here, in the process of bonding the gas exhaust films, the gas exhaust films 140a and 140b are compressed and bonded with heat and a pressure. The process of bonding the gas discharge films may be performed simultaneously with the process (e) or may be performed separately from the process (e).

In the present invention, an example in which the process of bonding the gas discharge film 140a is performed separately with respect to the process (e) will be described as an embodiment.

### Process of bonding gas discharge film

In the process of bonding the gas discharge film, the gas discharge part 140 is manufactured by pressing the gas discharge film 140a disposed on the top and bottom surfaces of the electrode lead 130.

That is, the gas transmitting films 141 respectively disposed on the top and bottom surfaces of the electrode lead 130 are bonded to each other to surround a circumference of the electrode lead 130, and the moisture absorbing materials 142 respectively disposed on the top and bottom surfaces of the electrode lead 130 may be bonded to surround a circumference of the gas transmitting film. In addition, the adhesive films 143 respectively disposed on the top and bottom surfaces of the electrode lead 130 are bonded to seal a gap between the electrode lead and the sealing part.

Here, since the adhesive film 143 has an area greater than that of the gas transmitting film 141, the entire gas transmitting film may be surrounded to prevent the moisture absorbing material 142 from being exposed to the outside.

### Process (e)

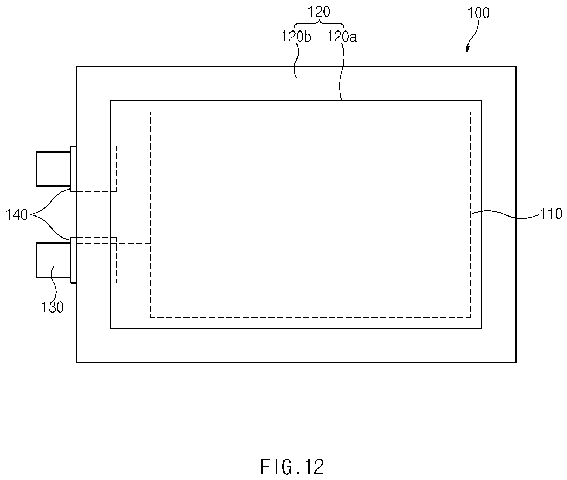

In the process (e), referring to FIG. 12, the sealing part 120b is formed by thermally sealing the upper sealing surface 121b and the lower sealing surface 122b. Here, the gas discharge part 140 disposed in the electrode lead 130 together with the sealing part 120b is also bonded to the sealing part 120b to seal the gap between the electrode lead 130 and the sealing part 120b.

When the process (e) is completed as described above, the secondary battery 100 comprising the gas discharge part as illustrated in FIG. 1 may be manufactured.

Thereafter, when a gas pressure inside the secondary battery 100 rises, the gas inside the pouch may be discharged to the outside through the gas discharge part provided between the electrode lead and the sealing part to prevent the pouch from being vented. Here, since the adhesive film 143 also has air permeability, the gas inside the pouch may be partially discharged. Thus, it is possible to prevent the gas pressure inside the secondary battery from significantly increasing, thereby improving safety of the secondary battery.

Here, moisture from the outside of the pouch 120 may be introduced through the gas discharge part, but may be absorbed through the moisture absorbing material 142 contained in the gas discharge part 140, and as a result, an inflow of the moisture into the pouch may be blocked.

Hereinafter, in descriptions of another embodiment of the present invention, constituents having the same function as the above-mentioned embodiment have been given the same reference numeral in the drawings, and thus duplicated description will be omitted.

### [Secondary battery according to second embodiment of the present invention]

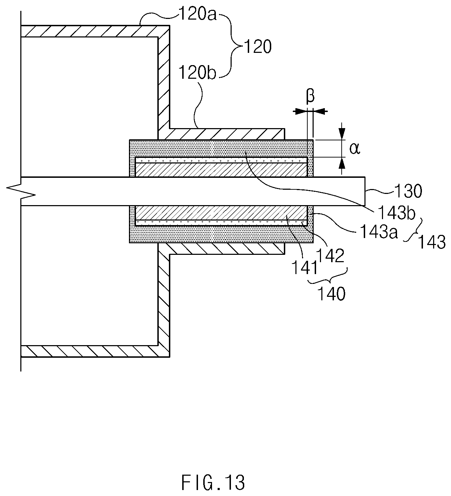

As illustrated in FIG. 13, a secondary battery 100 according to a second embodiment of the present invention comprises a gas discharge part 140 provided between an electrode lead 130 and a sealing part 120b of a pouch 120, and the gas discharge part 140 comprises a gas transmitting film 141 and a moisture absorbing material 142. Here, an adhesive film 143 is attached to the outside of the gas discharge part.

The adhesive film 143 comprises end surfaces 143a provided on both sides of the gas discharge part 140 exposed to the inside and outside of the pouch 120 and a circumferential surface 143b provided on a remaining surface of the gas discharge part 140.

Here, each of the end surfaces 143a has a thickness less than that of the circumferential surface 143b to further increase in air permeability than that of the circumferential surface 143b. That is, the thickness α of the circumferential surface 143b is formed to be thicker than the thickness β of the end surface 143a. Thus, the circumferential surface 143b may improve sealing force between the electrode lead and the sealing part, and the end surface 143a may adjust a discharge amount of gas discharged from the inside to the outside of the pouch while preventing the moisture absorbing material from being exposed.

### [Secondary battery according to third embodiment of the present invention]

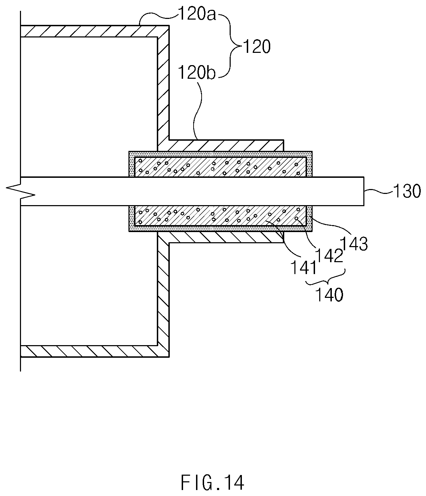

As illustrated in FIG. 14, a secondary battery 100 according to a third embodiment of the present invention comprises a gas discharge part 140. Here, the gas discharge part 140 comprises a gas transmitting film 141 and a moisture absorbing material 142. Also, an adhesive film 143 is attached to the outside of the gas discharge part 140.

Here, the moisture absorbing material 142 may be contained throughout the gas transmitting film 141.

That is, in the process (c) of manufacturing the secondary battery according to the first embodiment of the present invention, which is described above, the moisture absorbing material 142 may be manufactured as the gas transmitting film 141 containing the moisture adsorbing material 142 while being contained when the gas transmitting film 141 is manufactured.

In more detail, a composite material may be prepared by mixing the moisture absorbing material 142 and the gas transmitting film 141, and also, the composite material may be processed in the form of a film to manufacture the gas transmitting film 141 containing the moisture absorbing material 142.

Therefore, in the secondary battery 100 according to the third embodiment of the present invention, the moisture passing through the gas transmitting film may be absorbed and removed through the moisture absorbing material, and the gas inside the pouch may also be discharged through the moisture absorbing material to improve the gas discharge performance.

### [Secondary battery according to fourth embodiment of the present invention]

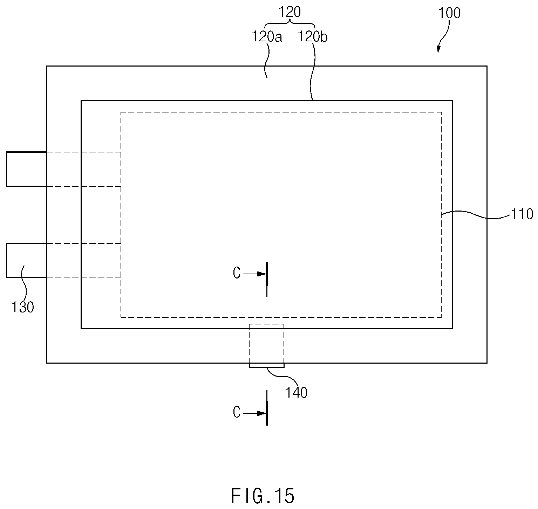

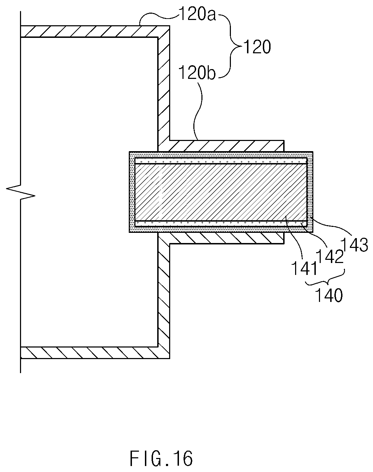

As illustrated in FIGS. 15 and 16, a secondary battery 100 according to a fourth embodiment of the present invention comprises an electrode assembly 120 to which an electrode lead is coupled, a pouch 120, and a gas discharge part 140. Here, the gas discharge part 140 comprises a gas transmitting film 141 and a moisture absorbing material 142.

Here, the gas discharge part 140 is provided in a sealing part 120b of the pouch 120 on which the electrode lead is not disposed.

That is, the gas discharge part 140 is disposed between an upper sealing surface 121b and a lower sealing surface 122b without the electrode lead and is coupled together when the upper sealing surface 121b and the lower sealing surface 122b are thermally fused.

An adhesive film 143 is provided between the gas discharge part 140 and the sealing part 120b. Here, the adhesive film 143 is attached to the outside of the gas discharge part 140.

Therefore, the secondary battery 100 according to the fourth embodiment of the present invention may comprise the gas exhaust part even in the sealing part without the electrode lead, and as a result, the gas generated inside the secondary battery may be effectively discharged, and the inflow of moisture from the outside to the inside of the secondary battery may be blocked.

Accordingly, the scope of the present invention is defined by the appended claims more than the foregoing description and the exemplary embodiments described therein.

### [Description of the Symbols]

100: Secondary battery
110: Electrode assembly
120: Pouch
130: Electrode lead
140: Gas discharge part
141: Gas transmitting film
142: Moisture absorbing material
143: Adhesive film

## Claims

1. A secondary battery (100) comprising:
an electrode assembly (110) to which an electrode lead (130) is coupled;
a pouch (120) comprising an accommodation part configured to accommodate the electrode assembly (110) in a state, in which a front end of the electrode lead (130) is withdrawn to the outside, and a sealing part formed along a circumference of the accommodation part to seal the accommodation part; and
a gas discharge part (140) provided in the pouch (120) to discharge a gas from the inside to the outside of the pouch (120) and block an inflow of moisture from the outside to the inside of the pouch (120), **characterized in that**
the gas discharge part (140) is provided between the electrode lead (130) and the sealing part and comprises: a gas transmitting film (141) having air permeability, by which the gas inside the accommodation part is discharged to the outside; and a moisture absorbing material (142) that absorbs the moisture passing through the gas transmitting film (141) to block the inflow of the moisture from the outside to the inside of the pouch (120).

2. The secondary battery (100) of claim **1,** wherein the gas discharge part (140) is provided in the sealing part.

3. The secondary battery (100) of claim 1 or 2, wherein an adhesive film (143) configured to seal a gap between the gas discharge part (140) and the sealing part is provided between the gas discharge part (140) and the sealing part.

4. The secondary battery (100) of claim 3, wherein the adhesive film (143) is made of a material having air permeability.

5. The secondary battery (100) of claim 4, wherein the adhesive film (143) is provided to surround an entire outer circumferential surface of the gas transmitting film (141) so as not to expose the gas discharge part (140) to the outside.

6. The secondary battery (100) of claim 4, wherein the adhesive film (143) has air permeability less than that of the gas transmitting film (141).

7. The secondary battery (100) of claim **1,** wherein the moisture absorbing material (142) is provided on an outer surface of the gas transmitting film (141).

8. The secondary battery (100) of claim **1,** wherein the moisture absorbing material (142) is provided to be contained in the gas transmitting film (141).

9. The secondary battery (100) of claim **1,** wherein the gas transmitting film (141) is made of a thermoplastic resin, and
the moisture absorbing material (142) is made of oxide that absorbs moisture.

10. A method for manufacturing a secondary battery (100), the method comprising:
a process (a) of preparing a pouch (120) provided with an upper case and a lower case, wherein the upper case is provided with an upper accommodation surface and an upper sealing surface, and the lower case is provided with a lower accommodation surface and a lower sealing surface;
a process (b) of disposing an electrode assembly (110), to which an electrode lead (130) is coupled, in an accommodation part formed by connecting the upper accommodation surface to the lower accommodation surface after the upper case and the lower case are disposed to correspond to each other;
a process (c) of manufacturing a gas discharge part (140) comprising a gas transmitting film (141) having air permeability and a moisture absorbing material (142) that absorbs moisture passing through the gas transmitting film;
a process (d) of disposing the gas discharge part (140) between the upper sealing surface of the upper case and the lower sealing surface of the lower case, the gas discharge part (140) is provided between the upper sealing surface and the lower sealing surface, which correspond to the electrode lead (130); and
a process (e) of thermally fusing the upper sealing surface and the lower sealing surface to form a sealing part.

11. The method of claim 10, further comprising, after the gas discharge part (140) is manufactured in the process (c), a process of attaching an adhesive film (143) to the outside of the gas discharge part (140).

12. The method of claim 10, wherein, in the process(c), the moisture absorbing material (142) is provided outside the gas transmitting film (141).

13. The method of claim 10, wherein, in the process (c), the moisture absorbing material (142) is contained in the gas transmitting film (141) when the gas transmitting film (141) is manufactured.

## Patentansprüche

1. Sekundärbatterie (100), umfassend:
eine Elektrodenanordnung (110), an welche eine Elektrodenleitung (130) gekoppelt ist;
einen Beutel (120), welcher einen Aufnahmeteil, welcher dazu eingerichtet ist, die Elektrodenanordnung (110) in einem Zustand aufzunehmen, in welchem ein vorderes Ende der Elektrodenleitung (130) nach Außen zurückgezogen ist, und einen Dichtungsteil umfasst, welcher entlang eines Umfangs des Aufnahmeteils gebildet ist, um den Aufnahmeteil abzudichten; und
einen Gasentladungsteil (140), welcher in dem Beutel (120) bereitgestellt ist, um ein Gas von der Innenseite zu der Außenseite des Beutels (120) zu entladen und einen Eintritt von Feuchtigkeit von der Außenseite zu der Innenseite des Beutels (120) zu blockieren,
**dadurch gekennzeichnet, dass** der Gasentladungsteil (140) zwischen der Elektrodenleitung (130) und dem Dichtungsteil bereitgestellt ist und umfasst: einen gasübertragenden Film (141), welcher eine Luftdurchlässigkeit aufweist, durch welche das Gas innerhalb des Aufnahmeteils zu der Außenseite entladen wird; und ein feuchtigkeitsabsorbierendes Material (142), welches das Passieren durch den gasübertragenden Film (141) absorbiert, um den Eintritt der Feuchtigkeit von der Außenseite zu der Innenseite des Beutels (120) zu blockieren.

2. Sekundärbatterie (100) nach Anspruch 1, wobei der Gasentladungsteil (140) in dem Dichtungsteil bereitgestellt ist.

3. Sekundärbatterie (100) nach Anspruch 1 oder 2, wobei ein Klebefilm (143), welcher dazu eingerichtet ist, einen Spalt zwischen dem Gasentladungsteil (140) und dem Dichtungsteil abzudichten, zwischen dem Gasentladungsteil (140) und dem Dichtungsteil bereitgestellt ist.

4. Sekundärbatterie (100) nach Anspruch 3, wobei der Klebefilm (143) aus einem Material hergestellt ist, welches eine Luftdurchlässigkeit aufweist.

5. Sekundärbatterie (100) nach Anspruch 4, wobei der Klebefilm (143) bereitgestellt ist, um eine gesamte äußere Umfangsfläche des gasübertragenden Films (141) zu umgeben, um den Gasentladungsteil (140) nicht zu der Außenseite zu exponieren.

6. Sekundärbatterie (100) nach Anspruch 4, wobei der Klebefilm (143) eine Luftdurchlässigkeit aufweist, welche geringer als die des gasübertragenden Films (141) ist.

7. Sekundärbatterie (100) nach Anspruch 1, wobei das
feuchtigkeitsabsorbierende Material (142) an einer äußeren Fläche des gasübertragenden Films (141) bereitgestellt ist.

8. Sekundärbatterie (100) nach Anspruch 1, wobei das
feuchtigkeitsabsorbierende Material (142) bereitgestellt ist, um in dem gasübertragenden Film (141) enthalten zu sein.

9. Sekundärbatterie (100) nach Anspruch 1, wobei der gasübertragende Film (141) aus einem thermoplastischen Harz hergestellt ist, und
wobei das feuchtigkeitsabsorbierende Material (142) aus einem Oxid hergestellt ist, welches Feuchtigkeit absorbiert.

10. Verfahren zur Herstellung einer Sekundärbatterie (100), wobei das Verfahren umfasst:
einen Vorgang (a) eines Vorbereitens eines Beutels (120), welcher mit einem oberen Gehäuse und einem unteren Gehäuse bereitgestellt ist, wobei das obere Gehäuse mit einer oberen Aufnahmefläche und einer oberen Dichtungsfläche bereitgestellt ist, und wobei das untere Gehäuse mit einer unteren Aufnahmefläche und einer unteren Dichtungsfläche bereitgestellt ist;
einen Vorgang (b) eines Anordnens einer Elektrodenanordnung (110), an welche eine Elektrodenleitung (130) gekoppelt ist, in einem Aufnahmeteil, welcher durch Verbinden der oberen Aufnahmefläche mit der unteren Aufnahmefläche gebildet ist, nachdem das obere Gehäuse und das untere Gehäuse angeordnet sind, um einander zu entsprechen;
einen Vorgang (c) eines Herstellens eines Gasentladungsteils (140), welcher einen gasübertragenden Film (141), welcher eine Luftdurchlässigkeit aufweist, und ein feuchtigkeitsabsorbierendes Material (142) umfasst, welches Feuchtigkeit absorbiert, welche durch den gasübertragenden Film passiert;
einen Vorgang (d) eines Anordnens des Gasentladungsteils (140) zwischen der oberen Dichtungsfläche des oberen Gehäuses und der unteren Dichtungsfläche des unteren Gehäuses, wobei der Gasentladungsteil (140) zwischen der oberen Dichtungsfläche und der unteren Dichtungsfläche bereitgestellt ist, welche der Elektrodenleitung (130) entsprechen; und
einen Vorgang (e) eines thermischen Schmelzens der oberen Dichtungsfläche und der unteren Dichtungsfläche, um einen Dichtungsteil zu bilden.

11. Verfahren nach Anspruch 10, ferner umfassend, nachdem der Gasentladungsteil (140) in dem Vorgang (c) hergestellt wird, einen Vorgang eines Befestigens eines Klebefilms (143) an der Außenseite des Gasentladungsteils (140).

12. Verfahren nach Anspruch 10, wobei, in dem Vorgang (c), das feuchtigkeitsabsorbierende Material (142) außerhalb des gasübertragenden Films (141) bereitgestellt ist.

13. Verfahren nach Anspruch 10, wobei, in dem Vorgang (c), das feuchtigkeitsabsorbierende Material (142) in dem gasübertragenden Film (141) enthalten ist, wenn der gasübertragende Film (141) hergestellt wird.

## Revendications

1. Batterie secondaire (100) comprenant :
un ensemble électrode (110) auquel est couplé un fil d'électrode (130) ;
une poche (120) comprenant une partie de logement configurée pour loger l'ensemble électrode (110) dans un état, dans laquelle une extrémité avant du fil d'électrode (130) est retirée vers l'extérieur, et une partie de scellement formée le long d'une circonférence de la partie de logement pour sceller la partie de logement ;
et
une partie d'évacuation de gaz (140) disposée dans la poche (120) pour évacuer un gaz de l'intérieur vers l'extérieur de la poche (120) et bloquer un afflux d'humidité de l'extérieur vers l'intérieur de la poche (120), **caractérisée en ce que**
la partie d'évacuation de gaz (140) est disposée entre le fil d'électrode (130) et la partie de scellement et comprend : un film de transmission de gaz (141) présentant une perméabilité à l'air, au moyen duquel le gaz à l'intérieur de la partie de logement est évacué vers l'extérieur ; et un matériau absorbant l'humidité (142) qui absorbe l'humidité passant à travers le film de transmission de gaz (141) pour bloquer l'afflux de l'humidité de l'extérieur vers l'intérieur de la poche (120).

2. Batterie secondaire (100) selon la revendication 1, dans laquelle la partie d'évacuation de gaz (140) est disposée dans la partie de scellement.

3. Batterie secondaire (100) selon la revendication 1 ou 2, dans laquelle un film adhésif (143) configuré pour sceller un espace entre la partie d'évacuation de gaz (140) et la partie de scellement est disposé entre la partie d'évacuation de gaz (140) et la partie de scellement.

4. Batterie secondaire (100) selon la revendication 3, dans laquelle le film adhésif (143) est constitué d'un matériau présentant une perméabilité à l'air.

5. Batterie secondaire (100) selon la revendication 4, dans laquelle le film adhésif (143) est prévu pour entourer une surface circonférentielle extérieure entière du film de transmission de gaz (141) de façon à ne pas exposer la partie d'évacuation de gaz (140) à l'extérieur.

6. Batterie secondaire (100) selon la revendication 4, dans laquelle le film adhésif (143) présente une perméabilité à l'air inférieure à celle du film de transmission de gaz (141).

7. Batterie secondaire (100) selon la revendication 1, dans laquelle le matériau absorbant l'humidité (142) est disposé sur une surface externe du film de transmission de gaz (141).

8. Batterie secondaire (100) selon la revendication 1, dans laquelle le matériau absorbant l'humidité (142) est prévu pour être contenu dans le film de transmission de gaz (141).

9. Batterie secondaire (100) selon la revendication 1, dans laquelle le film de transmission de gaz (141) est constitué d'une résine thermoplastique, et
le matériau absorbant l'humidité (142) est constitué d'un oxyde qui absorbe l'humidité.

10. Procédé de fabrication d'une batterie secondaire (100), le procédé comprenant :
un processus (a) consistant à préparer une poche (120) dotée d'un boîtier supérieur et d'un boîtier inférieur, dans lequel le boîtier supérieur est doté d'une surface de logement supérieure et d'une surface de scellement supérieure, et le boîtier inférieur est doté d'une surface de logement inférieure et d'une surface de scellement inférieure ;
un processus (b) consistant à disposer un ensemble électrode (110), auquel est couplé un fil d'électrode (130), dans une partie de logement formée par liaison de la surface de logement supérieure à la surface de logement inférieure après que le boîtier supérieur et le boîtier inférieur sont disposés de façon à correspondre l'un à l'autre ;
un processus (c) consistant à fabriquer une partie d'évacuation de gaz (140) comprenant un film de transmission de gaz (141) présentant une perméabilité à l'air et un matériau absorbant l'humidité (142) qui absorbe l'humidité passant à travers le film de transmission de gaz ;
un processus (d) consistant à disposer la partie d'évacuation de gaz (140) entre la surface de scellement supérieure du boîtier supérieur et la surface de scellement inférieure du boîtier inférieur, la partie d'évacuation de gaz (140) est disposée entre la surface de scellement supérieure et la surface de scellement inférieure, qui correspondent au fil d'électrode (130) ; et
un processus (e) consistant à thermosouder la surface de scellement supérieure et la surface de scellement inférieure pour former une partie de scellement.

11. Procédé selon la revendication 10, comprenant en outre, après la fabrication de la partie d'évacuation de gaz (140) dans le processus (c), un processus consistant à fixer un film adhésif (143) à l'extérieur de la partie d'évacuation de gaz (140).

12. Procédé selon la revendication 10, dans lequel, dans le processus (c), le matériau absorbant l'humidité (142) est disposé à l'extérieur du film de transmission de gaz (141).

13. Procédé selon la revendication 10, dans lequel, dans le processus (c), le matériau absorbant l'humidité (142) est contenu dans le film de transmission de gaz (141) lorsque le film de transmission de gaz (141) est fabriqué.
